# EUROPÄISCHE PATENTSCHRIFT

(11) **EP 2 350 481 B1**
(45) Veröffentlichungstag und Bekanntmachung des Hinweises auf die Patenterteilung: **13.04.2016**
(21) Anmeldenummer: 09740659.9
(22) Anmeldetag: 21.10.2009
(51) Int. Cl.: F16C 33/54

(54) **WÄLZLAGERKÄFIG**
ROLLING BEARING CAGE
CAGE DE ROULEMENT

(30) Priorität: 27.10.2008 DE 202008014280 U
(43) Veröffentlichungstag der Anmeldung: 03.08.2011
(73) Patentinhaber: Aktiebolaget SKF, 415 50 Göteborg (SE)
(72) Erfinder: BEYFUSS, Berthold, 97535 Kaisten (DE); FRIEDRICH, Hans-Jürgen, 97486 Königsberg (DE); FUCHS, Fred, 97422 Schweinfurt (DE); RADINA, Alfred, 97711 Maßbach (DE); SCHIERLING, Jonas, 97437 Haßfurt (DE)
(74) Vertreter: Kohl, Thomas
(86) Internationale Anmeldenummer: PCT/EP2009/007540
(87) Internationale Veröffentlichungsnummer: WO 2010/049084

(56) Entgegenhaltungen:
- EP-A1- 0 033 454
- WO-A1-2008/131924
- WO-A2-2009/056310
- DE-C- 969 961
- DE-U1- 7 935 982
- GB-A- 1 388 645
- JP-A- 6 117 440
- US-A- 2 489 342
- US-A- 3 365 775
- US-A- 3 482 891

## Beschreibung

Die Erfindung betrifft einen Wälzlagerkäfig mit wenigstens U-förmig begrenzten Taschen für Wälzkörper.

Beispielsweise aus der DE 79 35 982 U1 ist ein Wälzlagerkäfig bekannt, der aus zwei Seitenteilen und einer Vielzahl von getrennt gefertigten und durch Schweißen oder dgl. mit den Seitenteilen verbundenen Stegteilen besteht, wobei die Stegteile zwischen sich Taschen zur Aufnahme der Wälzkörper bilden. Dabei sind die Seiten- und Stegteile aus flach- oder profilgewalztem Draht gefertigt und die Stegteile zur Bildung von Anlaufflächen für die Wälzkörper angeprägt.

Bei einem Kegelrollenlagerkäfig kann ein Seitenteil gewellt ausgeführt sein. Dieses gewellte Seitenteil, das im gestreckten Zustand die gleiche Länge wie das andere Seitenteil aufweist, kann auf der Seite des Käfigs mit dem kleineren Durchmesser angeordnet werden.

Das nicht vorveröffentlichte Dokument WO 2008 131 924 A1, das die Priorität der DE 10 2007 020 113 in Anspruch nimmt, beschreibt einen Wälzlagerkäfig mit Taschen für die Wälzkörper, bestehend aus zwei ringartigen Umfangselementen und entsprechend der Anzahl von Wälzkörpern vorgesehenen Stegelementen, wobei sich jeweils zwischen zwei benachbarten Stegelementen eine der Taschen erstreckt. Die Seitenteile sind entsprechend der Anzahl von Stegelementen mit Ein- oder Ausbauchungen ausgebildet, die auf den Querschnitt der Stegelemente abgestimmt sind. Die Stegelemente werden in den Ein- oder Ausbauchungen positioniert und dort mittels Verschweißen, Verlöten oder Verkleben mit den Seitenringen verbunden. Die innere oder äußere Mantelfläche kann als Führungsfläche für den Käfig fungieren.

Eine Aufgabe der vorliegenden Erfindung ist es, einen verbesserten Wälzlagerkäfig mit wenigstens U- förmig begrenzten Taschen für Wälzkörper zu schaffen.

Die Aufgabe wird durch den Gegenstand des Anspruchs 1 gelöst. Vorteilhafte Ausgestaltungen sind in den Unteransprüchen beschrieben.

Gemäß Anspruch 1 beinhaltet ein Wälzlagerkäfig mit wenigstens U- förmig begrenzten Taschen für Wälzkörper folgende Merkmale:
- Wenigstens ein ringartiges Umfangselement, das in Umfangsrichtung verteilt mit wenigstens drei radialen Ein- oder Ausbauchungen ausgebildet ist, deren innere oder äußere Mantelfläche als Führungsfläche für den Käfig fungiert,
- an das Umfangselement sind Stegelemente stoffschlüssig angebunden, wobei sich jeweils zwischen zwei benachbarten Stegelementen eine der Taschen erstreckt, und
- die Stegelemente sind jeweils zwischen zwei benachbarten Ein- oder Ausbauchungen am Umfangselement an der den Ein- oder Ausbauchungen radial gegenüberliegenden äußeren bzw. inneren Mantelfläche befestigt.

Die Erfindung beruht dabei unter anderem auf der Erkenntnis, dass es insbesondere bei einer Schulterführung des Käfigs gilt, eine radiale Distanz zwischen der Anlage eines Mantels des Umfangselements an einer Innen- oder Außenschulter bzw. einem Innenring- oder Außenringbord auf der einen Seite und einer Wälzkörperanlagefläche an den Stegelementen auf der anderen Seite zu überbrücken. Durch die Ein- und Ausbauchungen gemäß der Erfindung wird die Überbrückung mit Vorteil gegenüber einem unausgebauchten, kreisringartigen Umfangselement mit sehr viel niedrigerem Materialeinsatz erzielt. Dadurch, dass die Stegelemente am Umfangselement insbesondere angeschweißt sind, können die gleichartig ausgebildeten Stegelemente in einfacher und kostengünstiger Weise durch ein Ablängen von einem entsprechend profilierten Stangen- oder Bandmaterial bevorzugt aus Stahl herstellt werden. Damit bietet der Wälzlagerkäfig gemäß der vorliegenden Erfindung natürlich gegenüber Wälzlagerkäfigen, die aus einem hohlzylinderartigen Rohling herausgearbeitet werden, auch den Vorteil, dass kein Materialabfall durch ein Herausarbeiten insbesondere der Käfigtaschen entsteht und sich somit mit Vorteil eine Materialeinsparung gegenüber derartigen Verfahren ergibt.

In einer vorteilhaften Ausgestaltung sind das Umfangselement einerseits und die Stegelemente andererseits mit unterschiedlichen Eigenschaften ausgebildet. Damit ist es mit Vorteil möglich, verschiedene Werkstoffe zu paaren und beispielsweise je nach Anwendungsfall weniger belastete Elemente aus kostengünstigerem Material herzustellen. Weiterhin ist es auch möglich, eines der Elemente für eine hohe Verschleißfestigkeit aus einem wärmebehandelten Stahl auszubilden und andere Elemente, beispielsweise für eine hohe Zähigkeit, unbehandelt zu lassen.

In einer weiteren vorteilhaften Ausgestaltung ist es möglich, wenigstens eines der Elemente beschichtet auszubilden. Dabei ist es aufgrund der Zusammensetzung des Wälzlagerkäfigs aus Umfangs- und Stegelementen sehr viel einfacher und damit auch kostengünstiger nur die Beschichtung von einzelnen Elementen, beispielsweise den Stegelementen, vorzunehmen. Entsprechendes gilt für eine weitere vorteilhafte Ausgestaltung, bei der an den den Wälzkörper zugewandten Flächen der Stegelemente beispielsweise schiffsrumpfähnliche bzw. tropfenförmig eingebrachte Prägungen in der Funktion als Schmiertaschen vorgesehen sind.

Weitere Vorteile, Merkmale und Einzelheiten der Erfindung ergeben sich aus den im Folgenden beschriebenen Ausführungsbeispielen anhand der Figuren. Dabei zeigen:

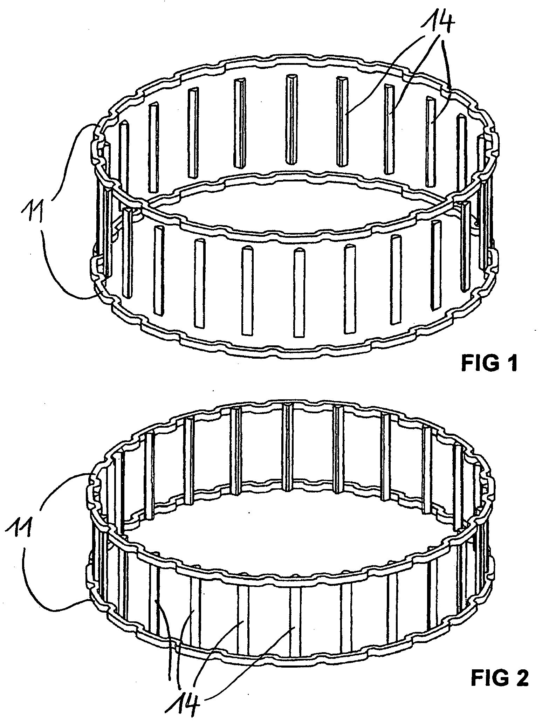

Figuren 1 und 2 in perspektivischer Ansicht einen nicht erfindungsgemäßen Zylinderrollenlagerkäfig mit zwei gewellten Umfangselementen und Stegelementen in einem unverbundenen und verbundenen Zustand der Elemente,

Die Figuren 1 und 2 zeigen in perspektivischer Ansicht einen nicht erfindungsgemäßen Zylinderrollenlagerkäfig mit zwei in Umfangsrichtung gewellt ausgebildeten Umfangselementen 11 für Stegelemente 14 mit einem einheitlichen trapezförmigen Querschnitt. Dabei zeigt die Figur 1 den Käfig in einem noch unverbundenen Zustand der Elemente 11 und 14 und die Figur 2 den Käfig nach einem Verbinden der Elemente 11 und 14. Die beiden Umfangselemente 11 sind dabei derart mit einer Wellung ausgestaltet, dass ihre Innenmäntel im Bereich der nach radial innen hin gerichteten Einbauchungen der Wellung als Führungsflächen für eine Führung an einem Außenmantel eines Bords eines inneren Laufbahnelements eines Zylinderrollenlagers dienen. Dabei sind die Stegelemente 14 an den Innenmänteln der Umfangselemente 11 jeweils zwischen zwei benachbarten Einbauchungen angeschweißt.

In einer anderen nicht erfindungsgemäßen Ausführungsform können die Stegelemente 14 natürlich auch in Mittenbereichen der Ausbauchungen, die weiter nach radial außen ausgebaucht sind, oder in einer erfindungsgemäßen Ausführungsform auch auβenmantelseitig angeschweißt werden, wodurch zwischen der Führungsfläche und den zum Kontaktieren der Rollenmäntel vorgesehenen Seitenflächen der Stegelemente 14 ein noch größerer radialer Abstand überbrückt werden kann. Die Verbindungsbereiche an den Umfangselementen für die Stegelemente 14 können entsprechend der DE 10 2007 020 113 A1 bzw. WO 2008 131 924 A1 zu den Stegelementen 14 passend ausgebildet sein. Dabei bietet natürlich die Befestigung der Stegelemente 14 am Innenmantel der Umfangselemente den ganz offensichtlichen Vorteil, dass diese dann durch die Umfangselemente sozusagen inhärent gegen die im Betrieb des Zylinderrollenlagers entstehenden Fliehkräfte aufgrund des sich drehenden Käfigs gesichert sind. Für eine Außenbordführung gilt das vorausgehend Beschriebene entsprechend umgekehrt mit nach radial außen ausgebauchten Ausbauchungen eines gewellten Umfangselements.

Die Elemente 11 und 14 sind aus einem Eisenwerkstoff, insbesondere aus einem Stahldraht hergestellt. In anderen Ausführungsformen können aber auch andere Materialien zum Einsatz kommen und anstelle eines Verschweißens auch ein Löten oder Kleben treten. Weiterhin können insbesondere auch die Stegelemente 14 zum Erzielen eines besonderen Gleitverhaltens, insbesondere im Bereich ihrer Kontaktflächen hin zu den Wälzkörpern, mit einer Beschichtung ausgebildet sein.

Schließlich ist das vorausgehend am Beispiel eines Fensterkäfigs für ein einreihiges Zylinderrollenradiallager Beschriebene auch auf andere Rollenlager, insbesondere Kegelrollenlager, aber auch sphärische Lager, CARB-Lager und auch Tonnenlager, aber auch auf Lager mit kammartigen Käfigen, auf Rollenlager mit mehreren Rollenreihen und auch auf Axiallager übertragbar.

## Patentansprüche

1. Wälzlagerkäfig mit wenigstens U-förmig begrenzten Taschen für Wälzkörper, beinhaltend folgende Merkmale:
- Wenigstens ein ringartiges Umfangselement, das in Umfangsrichtung verteilt mit wenigstens drei radialen Ein- oder Ausbauchungen ausgebildet ist, deren innere oder äußere Mantelfläche als Führungsfläche für den Käfig fungiert,
- an das Umfangselement sind Stegelemente stoffschlüssig angebunden, wobei sich jeweils zwischen zwei benachbarten Stegelementen eine der Taschen erstreckt, und
- die Stegelemente sind jeweils zwischen zwei benachbarten Ein- oder Ausbauchungen am Umfangselement an der den Ein- oder Ausbauchungen radial gegenüberliegenden äußeren bzw. inneren Mantelfläche befestigt.

2. Wälzlagerkäfig nach Anspruch 1, wobei die Elemente einen Eisenwerkstoff und das stoffschlüssige Verbinden ein Verschweißen umfassen.

3. Wälzlagerkäfig nach Anspruch 1, wobei das stoffschlüssige Verbinden ein Verlöten oder Verkleben umfasst.

4. Wälzlagerkäfig nach einem der Ansprüche 1 bis 3, wobei das Umfangselement entsprechend einer Anzahl von Stegelementen mit Ein- oder Ausbauchungen ausgebildet ist.

5. Wälzlagerkäfig nach einem der Ansprüche 1 bis 4, wobei entsprechend der Anzahl von Wälzkörpern Stegelemente vorgesehen sind.

6. Wälzlager nach einem der Ansprüche 1 bis 5, wobei die Stegelemente an einem Innenmantel des Umfangselements befestigt sind.

7. Wälzlagerkäfig nach einem der Ansprüche 1 bis 6, wobei das Umfangselement in Umfangsrichtung mit einer insbesondere gleichmäßigen Wellung ausgebildet ist.

8. Wälzlagerkäfig nach einem der Ansprüche 1 bis 7, wobei das Umfangselement einerseits und die Stegelemente andererseits mit unterschiedlichen Eigenschaften ausgebildet sind und/oder wenigstens eines der Elemente wenigsten in Teilbereichen beschichtet ausgebildet ist.

9. Wälzlagerkäfig nach einem der Ansprüche 1 bis 8, wobei wenigstens eines der Stegelemente an seinem zum Berühren der Wälzkörper vorgesehenen Flächen mit insbesondere schiffsrumpfähnlichen Schmiertaschen ausgebildet ist.

10. Wälzlagerkäfig nach einem der Ansprüche 1 bis 9, wobei eine Querschnittsfläche wenigstens eines Abschnitts eines der Stegelemente trapezförmig ist, und insbesondere die Seiten des Trapezes in Anpassung an den Wälzkörper bogenartig ausgebildet sind.

11. Wälzlagerkäfig nach einem der Ansprüche 1 bis 10, wobei das Umfangselement in sich geschlossen oder offen ausgebildet ist.

12. Wälzlagerkäfig nach einem der Ansprüche 1 bis 11, wobei an beiden axialen Enden der Stegelemente jeweils ein ringartiges Umfangselement angeordnet ist.

13. Wälzlagerkäfig nach einem der Ansprüche 1 bis 12, wobei sich axial an beide Stirnseiten des Umfangselements durch Stegelemente ausgebildete, wenigstens U-förmig begrenzte Taschen anschließen.

14. Wälzlagerkäfig nach einem der Ansprüche 1 bis 13, wobei der Wälzlagerkäfig als ein Rollenlagerkäfig, insbesondere für ein Zylinder-, Kegel- oder Pendelrollenlager ausgebildet ist.

15. Wälzlagerkäfig nach einem der Ansprüche 1 bis 14, wobei die Stegelemente von einem entsprechend profilierten Stangen- oder Bandmaterial abgelängt sind und/oder die Stegelemente gleichartig ausgebildet sind.

## Claims

1. Anti-friction bearing cage having pockets, delimited at least in a U-shaped manner, for rolling bodies, comprising the following features:
- at least one ring-like circumferential element which is configured in a manner which is distributed in the circumferential direction with at least three radial indentations or bulges, the inner or outer shell face of which acts as guide face for the cage,
- web elements are attached in an integrally joined manner to the circumferential element, one of the pockets extending in each case between two adjacent web elements, and
- the web elements are fastened in each case between two adjacent indentations or bulges to the circumferential element on the outer or inner shell face which lies radially opposite the indentations or bulges.

2. Anti-friction bearing cage according to Claim 1, the elements comprising an iron material and the integrally joined connection comprising welding.

3. Anti-friction bearing cage according to Claim 1, the integrally joined connection comprising brazing or adhesive bonding.

4. Anti-friction bearing cage according to one of Claims 1 to 3, the circumferential element being configured with indentations or bulges in a manner which corresponds to a number of web elements.

5. Anti-friction bearing cage according to one of Claims 1 to 4, web elements being provided in a manner which corresponds to the number of rolling bodies.

6. Anti-friction bearing according to one of Claims 1 to 5, the web elements being fastened to an inner shell of the circumferential element.

7. Anti-friction bearing cage according to one of Claims 1 to 6, the circumferential element being configured with an, in particular, homogeneous corrugation in the circumferential direction.

8. Anti-friction bearing cage according to one of Claims 1 to 7, the circumferential element on one side and the web elements on the other side being configured with different properties and/or at least one of the elements being of coated configuration at least in part regions.

9. Anti-friction bearing cage according to one of Claims 1 to 8, at least one of the web elements being configured on its surfaces provided for making contact with the rolling bodies with, in particular, hull-like lubricating pockets.

10. Anti-friction bearing cage according to one of Claims 1 to 9, a cross-sectional area of at least one section of one of the web elements being trapezoidal, and, in particular, the sides of the trapezium being of curved configuration in adaptation to the rolling body.

11. Anti-friction bearing cage according to one of Claims 1 to 10, the circumferential element being closed within itself or of open configuration.

12. Anti-friction bearing cage according to one of Claims 1 to 11, in each case one ring-like circumferential element being arranged at both axial ends of the web elements.

13. Anti-friction bearing cage according to one of Claims 1 to 12, pockets which are configured by way of web elements and are delimited at least in a U-shaped manner axially adjoining both end sides of the circumferential element.

14. Anti-friction bearing cage according to one of Claims 1 to 13, the anti-friction bearing cage being configured as a roller bearing cage, in particular for a cylindrical, tapered or self-aligning roller bearing.

15. Anti-friction bearing cage according to one of Claims 1 to 14, the web elements being cut to length from a correspondingly profiled bar or strip material and/or the web elements being of homogeneous configuration.

## Revendications

1. Cage de palier à roulement comprenant au moins des cavités limitées en forme de U pour des corps de roulement, comprenant les caractéristiques suivantes :
- au moins un élément périphérique de forme annulaire qui est réalisé avec au moins trois renfoncements ou bombements radiaux répartis dans la direction périphérique, dont la surface d'enveloppe intérieure ou extérieure sert de surface de guidage pour la cage,
- des éléments de nervures sont assemblés par engagement par liaison de matière à l'élément périphérique, une des cavités s'étendant à chaque fois entre deux éléments de nervures adjacents, et
- les éléments de nervures sont à chaque fois fixés à l'élément périphérique entre deux renfoncements ou bombements adjacents au niveau de la surface d'enveloppe extérieure ou intérieure opposée radialement aux renfoncements ou aux bombements.

2. Cage de palier à roulement selon la revendication 1, dans laquelle les éléments comprennent un matériau à base de fer et l'assemblage par engagement par liaison de matière comprend un soudage.

3. Cage de palier à roulement selon la revendication 1, dans laquelle l'assemblage par engagement par liaison de matière comprend un brasage ou un collage.

4. Cage de palier à roulement selon l'une quelconque des revendications 1 à 3, dans laquelle l'élément périphérique est réalisé en fonction d'une pluralité d'éléments de nervures avec des renfoncements ou des bombements.

5. Cage de palier à roulement selon l'une quelconque des revendications 1 à 4, dans laquelle des éléments de nervures sont prévus en fonction du nombre des corps de roulement.

6. Palier à roulement selon l'une quelconque des revendications 1 à 5, dans lequel les éléments de nervures sont fixés à une enveloppe interne de l'élément périphérique.

7. Cage de palier à roulement selon l'une quelconque des revendications 1 à 6, dans laquelle l'élément périphérique est réalisé dans la direction périphérique avec une ondulation notamment régulière.

8. Cage de palier à roulement selon l'une quelconque des revendications 1 à 7, dans laquelle l'élément périphérique d'une part et les éléments de nervures d'autre part sont réalisés avec des propriétés différentes et/ou au moins l'un des éléments est réalisé avec un revêtement au moins dans des régions partielles.

9. Cage de palier à roulement selon l'une quelconque des revendications 1 à 8, dans laquelle au moins l'un des éléments de nervures est réalisé, au niveau de ses surfaces prévues pour venir en contact avec les corps de roulement, avec des cavités de lubrification notamment en forme de coque de bateau.

10. Cage de palier à roulement selon l'une quelconque des revendications 1 à 9, dans laquelle une surface en section transversale d'au moins une portion de l'un des éléments de nervures est trapézoïdale et notamment les côtés du trapèze sont réalisés sous forme courbe de manière adaptée aux corps de roulement.

11. Cage de palier à roulement selon l'une quelconque des revendications 1 à 10, dans laquelle l'élément périphérique est réalisé sous forme fermée ou ouverte en soi.

12. Cage de palier à roulement selon l'une quelconque des revendications 1 à 11, dans laquelle à chaque fois un élément périphérique annulaire est disposé aux deux extrémités axiales des éléments de nervures.

13. Cage de palier à roulement selon l'une quelconque des revendications 1 à 12, dans laquelle des cavités limitées au moins en forme de U et réalisées par des éléments de nervures se raccordent axialement au niveau des deux côtés frontaux de l'élément périphérique.

14. Cage de palier à roulement selon l'une quelconque des revendications 1 à 3, dans laquelle la cage de palier à roulement est réalisée sous forme de cage de palier à rouleaux, en particulier pour un palier à roulement à rouleaux cylindriques, un palier à roulement à rouleaux coniques ou un palier à roulement à rouleaux sphériques.

15. Cage de palier à roulement selon l'une quelconque des revendications 1 à 14, dans laquelle les éléments de nervures sont découpés à la longueur à partir d'un matériau en barre ou en bande profilé de manière correspondante et/ou les éléments de nervures sont réalisés sous forme identique.
